# EUROPÄISCHE PATENTSCHRIFT

(11) **EP 1 180 266 B1**
(45) Veröffentlichungstag und Bekanntmachung des Hinweises auf die Patenterteilung: **13.08.2003**
(21) Anmeldenummer: 00936626.1
(22) Anmeldetag: 13.04.2000
(51) Int. Cl.: H04B 1/40

(54) **FREQUENZAUFBEREITUNGSSYSTEM FÜR EINEN MOBILFUNK-DUAL BAND-SENDER/EMPFÄNGER (TRANSCEIVER)**
FREQUENCY SYNTHESIS SYSTEM FOR A MOBILE TELEPHONE DUAL-BAND TRANSCEIVER
SYSTEME SYNTHETISEUR DE FREQUENCE POUR UN EMETTEUR-RECEPTEUR BIBANDE DE RADIOTELEPHONIE MOBILE

(30) Priorität: 13.04.1999 DE 19916574
(43) Veröffentlichungstag der Anmeldung: 20.02.2002
(73) Patentinhaber: Infineon Technologies AG, 81669 München (DE)
(72) Erfinder: HERZINGER, Stefan, D-80686 München (DE)
(74) Vertreter: Epping Hermann & Fischer
(86) Internationale Anmeldenummer: DE0001159
(87) Internationale Veröffentlichungsnummer: WO00062433

(56) Entgegenhaltungen:
- EP-A- 0 678 974
- EP-A- 0 780 968
- WO-A-97/30523

## Beschreibung

Die Erfindung betrifft ein Frequenzaufbereitungssystem für einen Mobilfunk-Sender/Empfänger (Transceiver), der wahlweise in zwei weit auseinanderliegenden HF-Frequenzbändern (Dual Band), insbesondere im 900 MHz- und 1800 MHz-Bereich, betreibbar ist, unter Verwendung zweier zueinander versetzter Lokaloszillator-Frequenzbänder, mit deren Hilfe das über ein ZF-Filter geführte Sendesignal in das obere bzw. untere Sendefrequenzband und das im oberen bzw. unteren Empfangsfrequenzband empfangene Signal in eine Empfangs-ZF-Lage umgesetzt werden, wobei die Frequenzumsetzung in das bzw. aus dem oberen Band mit unterlagerter Lokaloszillatorfrequenz und in das bzw. aus dem unteren Band mit überlagerter Lokaloszillatorfrequenz erfolgt und wobei auf der Empfangsseite für die Ausfilterung des ZF-Signals für beide Frequenzbänder ein gemeinsames hochselektives ZF-Filter vorgesehen ist.

Beim Mobilfunk findet bekanntlich zur Zeit eine Erweiterung der in Form von Sender/Empfängern (Transceiver) realisierten Endgeräte auf Mehrbandfähigkeit statt. Dies bedeutet, daß in zweckmäßiger Weise mit einem möglichst kleinen Mehraufwand in der Hochfrequenz-Signalverarbeitung sowohl der Sender als auch der Empfänger des Geräts bedient werden sollen.

Die Erfindung bezieht sich nur auf solche Systeme, die zwar verschiedene HF-Frequenzbänder verwenden, aber die Modulationsparameter, Bandbreite usw. in beiden Frequenzbändern gemeinsam haben, wie beispielsweise GSM 900 und GSM 1800. Weitaus am häufigsten werden im Mobilfunksektor Zweiband(Dual Band)-Konzepte mit frequenzmäßig weit auseinanderliegenden Bändern, z.B. im 900 MHz- und 1800 MHz-Bereich, verfolgt.

Vom Lokaloszillator werden insgesamt vier im allgemeinen verschiedene Frequenzbänder benötigt, um die vier unterschiedlichen Betriebsfälle, nämlich Empfangen im ersten Frequenzband, Empfangen im zweiten Frequenzband, Senden im ersten Frequenzband und Senden im zweiten Frequenzband, abzudecken. Da die Phasenrauschanforderungen an die HF-Oszillatoren, die in üblicher Weise durch spannungsgesteuerte Oszillatoren (VCOs; Voltage Controlled Oscillators) realisiert werden, in digitalen Übertragungssystemen sehr hoch sind, müßten im Extremfall vier getrennte spannungsgesteuerte Oszillatoren zum Einsatz gelangen.

In den meisten Frequenzaufbereitungssystemen für Mobilfunkgeräte werden heute vorabgeglichene VCO-Module verwendet. Diese Module stellen aufgrund der Abmessungen und ihres hohen Preises einen entscheidenden Volumen- und Kostenfaktor dar. Der Platzbedarf der Bauteile hat speziell im Mobilfunk eine sehr große Bedeutung, da die Miniaturisierung z.B. bei GSM-Mobilteilen (Handies) zu einem beherrschenden Faktor geworden ist. Da sich mobile Mehrband-Endgeräte hinsichtlich ihrer mechanischen Abmessungen von den gebräuchlichen Einband-Mobilfunkgeräten nicht unterscheiden dürfen, ist die Platzsituation bei den Mehrband-Geräten noch angespannter.

Praktisch zielt jedes bekannte Frequenzaufbereitungskonzept für mobile Zweiband-Sender/Empfänger (Dual Band-Transceiver) auf eine Minimierung der Anzahl der benötigten spannungsgesteuerten Oszillatoren. Dazu gibt es bereits mehrere verschiedene Ansätze, die jedoch in der Praxis an anderer Stelle im HF-Gesamtsystem deutliche Nachteile bringen. Im folgenden werden diese Ansätze kurz vorgestellt.

Die folgenden Betrachtungen sind dabei weitgehend unabhängig vom jeweiligen Senderkonzept, sofern nur eine Zwischenfrequenz (ZF) im Sender verwendet wird. Die Realisierung des Senders selbst kann hierbei durchaus sehr unterschiedlich sein und ändert nichts an den im folgenden erörterten Ansätzen und Überlegungen.

Die durch spannungsgesteuerte Oszillatoren abzudeckenden Frequenzbändern ergeben sich grundsätzlich aus den zu bedienenden Frequenzbändern und der Wahl der Zwischenfrequenzen. Des weiteren geht mit ein, ob die Frequenzumsetzung mit überlagerter oder unterlagerter Lokaloszillatorfrequenz stattfindet. Legt man sich auf einen Lokaloszillator-Frequenzbereich fest, so ergeben sich im Zweiband-Sender/Empfänger im allgemeinen vier verschiedene Zwischenfrequenzen.

Im Empfangspfad werden in üblicher Weise zur Kanalselektion hochselektive und mithin auch relativ aufwendige ZF-Filter verwendet, die zumeist als Oberflächenwellenfilter ausgebildet sind. Für das Gesamtsystem ist es daher effizienter, wenn ein gemeinsames Empfangs-ZF-Filter verwendet wird. Darüber hinaus vereinfacht sich die Situation auch, wenn für das obere Frequenzband, also z.B. für den Frequenzbereich bei 1800 MHz, stets eine unterlagerte Lokaloszillatorfrequenz und für das untere Frequenzband stets eine überlagerte Lokaloszillatorfrequenz verwendet wird.

Bei der Zuweisung der Frequenzbänder im Mobilfunk ist es üblich, auf der Mobilteilseite in einem zusammenwirkenden Frequenzband die Sendefrequenz niedriger als die Empfangsfrequenz zu legen. Diese Zuordnung erhöht die Effizienz der Sendeendstufe, was sich auf den Stromverbrauch vorteilhaft auswirkt.

Auf der Mobilteilseite ist dieser Aspekt besonders wichtig, da es gewünscht ist, mit möglichst kleiner Akku-Kapazität in den Mobilteilen auszukommen, um bei diesen ein niedriges Gewicht und eine geringe Baugröße zu erreichen. Sollen nun zwei Frequenzbänder bedient werden, so liegen die Sende- und Empfangsanordnung zueinander nicht spiegelsymmetrisch, was die Wahl der Zwischenfrequenzen erschwert, wie im folgenden noch gezeigt werden soll.

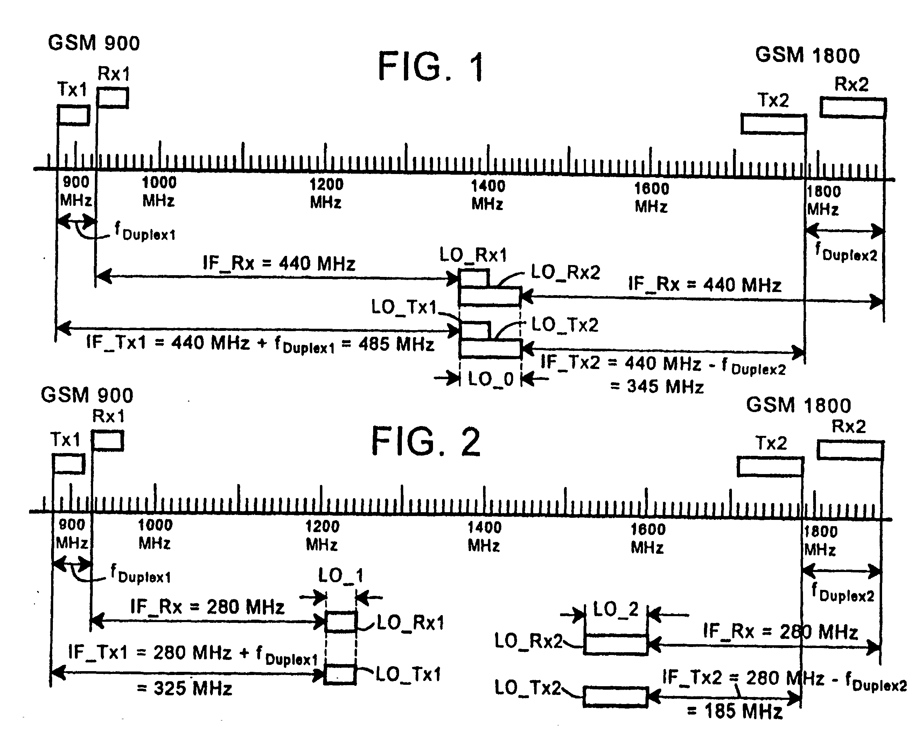

Im folgenden werden anhand von in FIG. 1 und FIG. 2 gezeigten graphischen Darstellungen zwei bisher schon benutzte Lösungsansätze erläutert. Die im folgenden interpretierten graphischen Darstellungen veranschaulichen nur die ungefähre Lage der Frequenzbänder zueinander. Ein detaillierter Frequenzplanentwurf, der z.B. unerwünschte Empfangsstellen niedriger Ordnung und Mischen der Harmonischen berücksichtigt, legt dann die Frequenzbänder jeweils genau fest.

Die bisher genutzten Lösungsansätze für eine Oszillatoren einsparende Frequenzaufbereitung werden im folgenden für einen GSM-Zweiband-Sender/Empfänger für GSM 900 und GSM 1800 dargestellt. Die dabei zu bedienenden Frequenzbänder sind zumeist, so wie auch in diesem Fall, durch international regulierte Frequenzzuweisung fest vorgegeben. Die zugrundeliegende Transceiver-Architektur ist beispielsweise der Druckschrift "RF Devices for Mobile Cellular Phones", Hitachi, May 1998, 04-027A entnehmbar.

FIG. 1 zeigt eine graphische Darstellung für den aus Sicht der Frequenzaufbereitung optimalen Lösungsansatz mit nur einem Lokaloszillator-Frequenzband LO_0. Das Sendefrequenzband Tx1 (unteres Sendefrequenzband) für GSM 900 liegt im Beispiel zwischen 880 und 915 MHz, das Empfangsfrequenzband Rx1 (unteres Empfangsfrequenzband) für GSM 900 zwischen 925 und 960 MHz, das Sendefrequenzband Tx2 (oberes Sendefrequenzband) für GSM 1800 zwischen 1710 und 1785 MHz und das Empfangsfrequenzband Rx2 (oberes Empfangsfrequenzband) für GSM 1800 zwischen 1805 und 1880 MHz. Der Duplexfrequenzabstand f_{Duplex1} zwischen den beiden Bändern für GSM 900 beträgt also 45 MHz, wogegen der Duplexfrequenzabstand f_{Duplex2} zwischen den beiden Bändern für GSM 1800 95 MHz beträgt.

Damit für beide Empfangsfrequenzbänder Rx1 und Rx2 die gleiche Empfangs-Zwischenfrequenz IF_Rx von 440 MHz und damit ein identisches ZF-Filter vorgesehen werden kann, liegt das Lokaloszillator-Frequenzband LO_Rx1 für GSM 900-Empfangsbetrieb zwischen 1365 und 1400 MHz und das Lokaloszillator-Frequenzband LO_Rx2 für GSM 1800-Empfang zwischen 1365 und 1440 MHz. Der große Nachteil dieses Lösungskonzepts ist die extrem hohe Empfangs-Zwischenfrequenz IF_Rx, die etwa die Hälfte der Empfangsfrequenz bei GSM 900 beträgt.

Im Falle von GSM ist mit der üblichen Oberflächenwellen-Technologie kein sinnvolles ZF-Filter für den Empfang mehr realisierbar. Darüber hinaus ist festzustellen, daß das im Empfangsfall jeweils nicht bediente Empfangsfrequenzband Rx1 bzw. Rx2 jeweils im Spiegelband des gerade aktiven Empfangsfrequenzbandes liegt. Dadurch ergeben sich bei der praktischen Realisierung zusätzliche Schwierigkeiten und deutlich erhöhte Anforderungen an die Abschirmung zwischen den beiden Empfangszweigen für GSM 900 und GSM 1800. Dies widerspricht der Forderung nach höherer Integration z.B. in einem integrierten HF-Schaltungsbaustein für beide Frequenzbänder.

Bei der im Konzept nach FIG. 1 zugrunde gelegten Benutzung eines einzigen, im Beispiel zwischen 1365 und 1440 MHz liegenden Lokaloszillator-Frequenzbandes LO_0, in dem das Lokaloszillator-Frequenzband LO_Tx1 für GSM 900-Sendebetrieb zwischen 1365 und 1400 MHz und das Lokaloszillator-Frequenzband LO_Tx2 für GSM 1800-Sendebetrieb zwischen 1365 und 1440 MHz liegen, unterscheiden sich die Sende-Zwischenfrequenzen IF_Tx1 und IF_Tx2 für das untere und das obere Sendefrequenzband Tx1 und Tx2 automatisch um die Summe der Duplexfrequenzabstände f_{Duplex1} = 45 MHz bzw. f_{Duplex2} = 95 MHz, also im Beispiel um 45 + 95 MHz = 140 MHz. Beim Sender ist es wichtig, daß jeweils die dritte Harmonische der Sende-Zwischenfrequenz mit möglichst geringem Filteraufwand stark unterdrückt werden kann. Je weiter die Sende-Zwischenfrequenzen IF_Tx1 und IF_Tx2 prozentual auseinander liegen, desto schwieriger wird es, dieses Ziel zu erreichen, da das Frequenzband zur Unterbringung der Filterflanke immer kleiner wird.
Es gilt hier:
Oberste Durchlaßfrequenz: IF_Tx1 = 485 MHz;
unterste 3. Harmonische: 3*IF_Tx2 = 1035 MHz;
relative Filtersperrfrequenz: Ωs = 1035/485 = 2,13.

Ein solches Filter ist mit niedriger Ordnung und toleranzbehafteten LC-Elementen noch realisierbar.

FIG. 2 zeigt eine graphische Darstellung für einen aus Sicht der Frequenzaufbereitung nicht mehr optimalen Lösungsansatz mit zwei Lokaloszillator-Frequenzbändern LO_1 und LO_2. Die Sendefrequenzbänder Tx1 und Tx2 für GSM 900-Sendebetrieb bzw. GSM 1800-Sendebetrieb sowie die Empfangsfrequenzbänder Rx1 und Rx2 für GSM 900-Empfangsbetrieb bzw. GSM 1800-Empfangsbetrieb und damit auch die Duplexfrequenzabstände f_{Duplex1} und f_{Duplex2} liegen im dargestellten Beispiel für dieses Konzept genauso wie nach FIG. 1. Beim in FIG. 2 dargestellten Konzept wird jedoch von einer gut realisierbaren und beherrschbaren Empfangs-Zwischenfrequenz IF_Rx ausgegangen, die unabhängig von der Lage der Frequenzbänder gewählt werden kann und für beide Empfangsfrequenzbänder gleich ist. Für beide Empfangsfrequenzbänder Rx1 und Rx2 beträgt im dargestellten Beispiel die Empfangs-Zwischenfrequenz IF_Rx 280 MHz, für die ein identisches ZF-Filter vorgesehen wird.

Das dem unteren Lokaloszillator-Frequenzband LO_1 entsprechende Lokaloszillator-Frequenzband LO_Rx1 für GSM 900-Empfangsbetrieb liegt zwischen 1205 und 1240 MHz und das dem oberen Lokaloszillator-Frequenzband LO_2 entsprechende Lokaloszillator-Frequenzband LO_Rx2 für GSM 1800 zwischen 1525 und 1600 MHz.

Bei der im Konzept nach FIG. 2 zugrunde gelegten Benutzung von zwei Lokaloszillator-Frequenzbändern LO_1 und LO_2, denen das Lokaloszillator-Frequenzband LO_Tx1 für GSM 900-Sendebetrieb zwischen 1205 und 1240 MHz bzw. das Lokaloszillator-Frequenzband LO_Tx2 für GSM 1800-Sendebetrieb zwischen 1525 und 1600 MHz entsprechen, unterscheiden sich die Sende-Zwischenfrequenzen IF_Tx1 und IF_Tx2 für das untere bzw. das obere Sendefrequenzband Tx1 und Tx2 ebenfalls automatisch um die Summe der Duplexfrequenzabstände f_{Duplex1} = 45 MHz bzw. f_{Duplex2} = 95 MHz, also im Beispiel um 45 + 95 MHz = 140 MHz. Die Sende-Zwischenfrequenz IF_Tx1 für das untere Band beträgt dabei 325 MHz und die Sende-Zwischenfrequenz IF_Tx2 für das obere Band 185 MHz. Bei einer genaueren Betrachtung des Senders ergibt sich jedoch:
Oberste Durchlaßfrequenz: IF_Tx1 = 325 MHz;
unterste 3. Harmonische: 3*IF_Tx2 = 555 MHz;
relative Filtersperrfrequenz: Ωs = 555/325 = 1,7.

Die hier notwendige Sende-ZF-Filterung ist nur mit einem stark erhöhten Aufwand erreichbar. Je nach Toleranzen ist ein umschaltbares Sende-ZF-Filter erforderlich, was die Komplexität, die Kosten und den Platzbedarf stark erhöht. Die Filterung im Sendezweig kann zwar entspannt werden, wenn beim vorstehend ausgeführten die Empfangs-ZF erhöht wird. Im Grenzfall geht dann dieses Konzept in den im Zusammenhang mit der FIG. 1 dargestellten Lösungsansatz über, d.h. es ist hier stets ein Kompromiß zwischen zu hoher Empfangs-Zwischenfrequenz und Schwierigkeiten bei der Sendesignal-Filterung zu treffen.

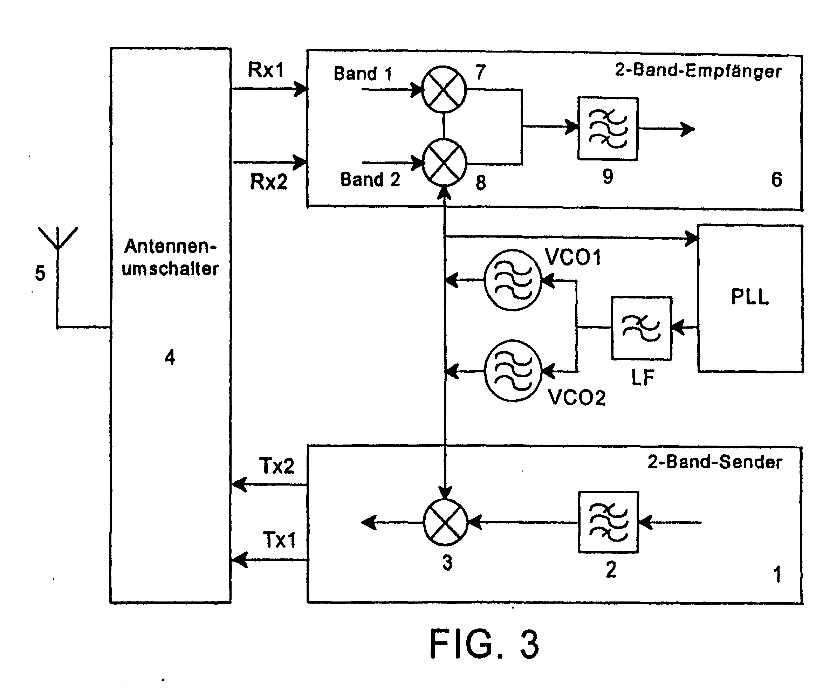

In der FIG. 3 ist ein Blockschaltbild einer Schaltung zur Frequenzaufbereitung in einem Zweiband-Sender/Empfänger (Dual Band-Transceiver) mit zwei Lokaloszillator-Frequenzbändern dargestellt. In einem Zweiband-Sender 1 wird das Sendesignal in der ZF-Lage über ein gemeinsames ZF-Filter 2 geleitet und dann mittels einer Mischstufe 3, der wahlweise die Ausgangssignale der beiden als Lokaloszillatoren dienenden spannungsgesteuerten Oszillatoren VCO1 und VCO2 zugeführt werden, in die untere oder in die obere HF-Sendefrequenzbandlage umgesetzt.

Das im unteren oder oberen Sendefrequenzband Tx1 bzw. Tx2 vorliegende Sendesignal wird dann über einen Antennen-Umschalter 4 einer Antenne 5 zur Funkaussendung zugeführt. Im Empfangsfall wird in einem Zweiband-Empfänger 6 das von der Antenne 5 aufgenommene und über den Antennen-Umschalter geleitete Empfangssignal im unteren oder oberen Empfangsfrequenzband Rx1 bzw. Rx2 in einer Mischstufe 7 für das untere Frequenzband bzw. in einer Mischstufe 8 für das obere Frequenzband in die ZF-Lage umgesetzt und über ein gemeinsames Zwischenfrequenz-Filter 9 geführt.

Die Mischstufen 7 und 8 erhalten entweder vom spannungsgesteuerten Oszillator VCO1 für das obere Frequenzband oder vom spannungsgesteuerten Oszillator VCO2 für das untere Frequenzband Lokaloszillator-Signale zur Durchführung der Umsetzung des jeweiligen Empfangssignals in die ZF-Lage. Die beiden spannungsgesteuerten Oszillatoren VCO1 und VCO2 sind Teil einer Phasenregelschleife (Phase Locked Loop) PLL mit einem Tiefpaß-Schleifenfilter LF.

In der Druckschrift WO 97/30523 A ist eine Dual-Mode Hochfrequenz-Sender/Empfänger-Architektur angegeben. Dabei sind bevorzugt zwei Lokaloszillatoren zur Frequenzumsetzung vorgesehen.

Der Erfindung liegt die Aufgabe zugrunde, eine Frequenzaufbereitung für einen auf engstem Raum unter hoher Integration aufzubauenden Zweiband-Sender/Empfänger für Mobilfunk zu schaffen, bei dem auf nur einen einzigen spannungsgesteuerten Oszillator zurückgegriffen werden soll, ohne daß an anderer Stelle im Sender/Empfänger ein erhöhter Aufwand entsteht oder das Gesamtsystem weniger robust gegen Fertigungstoleranzen ist.

Diese Aufgabe wird gemäß der Erfindung, die sich auf ein Frequenzaufbereitungssystem für einen Mobilfunk-Sender/Empfänger (Transceiver) der eingangs genannten Art bezieht, dadurch gelöst, daß das obere Lokaloszillator-Frequenzband ausschließlich zur Umsetzung des oberen Empfangsfrequenzbandes in die Empfangs-ZF-Lage und das untere Lokaloszillator-Frequenzband sowohl zur Umsetzung des unteren Empfangsfrequenzbandes in die gemeinsame Empfangs-ZF-Lage als auch zur Umsetzung des Sendesignals aus der ZF-Lage in die HF-Sendelage im oberen bzw. unteren Sendefrequenzband vorgesehen ist, wobei die Sende-ZF für die Umsetzung in das obere Frequenzband identisch mit der Sende-ZF in das untere Frequenzband ist, und daß der prozentuale Frequenzunterschied zwischen den beiden zueinander versetzten Lokaloszillator-Frequenzbändern höchstens so groß bemessen ist, daß beide Lokaloszillator-Frequenzbänder mit einem einzigen spannungsgesteuerten Oszillator (VCO) als Lokaloszillator, dessen Resonator bei der Bandumschaltung nach Art des sogenannten "band switched" VCO elektronisch umgeschaltet wird, ohne erhebliche Verschlechterung der Rauscheigenschaften in mindestens einem der Frequenzbänder bedienbar sind. Durch den Einsatz des durch die Erfindung angegebenen Frequenzaufbereitungssystems mit dem 3-fach/1-fach-Lokaloszillator-Konzept vereinfacht sich die für Empfang/Senden im unteren/oberen Band gemeinsam genutzte Frequenzerzeugung stark.

Vorteilhafte und zweckmäßige Weiterbildungen sowie Ausführungsmöglichkeiten sind in den Unteransprüchen angegeben.

Nicht nur hinsichtlich der Filterung im Empfangspfad, in dem für beide Frequenzbänder eine gemeinsame ZF-Lage vorliegt und deswegen ein identisches Empfangs-ZF-Filter eingesetzt werden kann, sondern auch in bezug auf die Filterung im Sendepfad ist das durch die Erfindung angegebene Frequenzaufbereitungskonzept optimal. Obwohl auf eine gemeinsame Empfangs-ZF aufgesetzt wird, ist auch die Sende-ZF für beide Frequenzbänder identisch. Damit ist die Sendefilterung sehr wirkungsvoll umzusetzen.

Die Erfindung wird anhand von Zeichnungen erläutert. Es zeigen:
- FIG. 1: eine bereits beschriebene graphische Darstellung im Zusammenhang mit einem nur ein Lokaloszillator-Frequenzband aufweisenden, bekannten Frequenzaufbereitungssystem für einen Dual Band-Mobilfunk-Sender/Empfänger,
- FIG. 2: eine ebenfalls bereits beschriebene graphische Darstellung im Zusammenhang mit einem zwei Lokaloszillator-Frequenzbänder aufweisenden, bekannten Frequenzaufbereitungssystem für einen Dual Band-Mobilfunk-Sender/Empfänger,
- FIG. 3: ein ebenfalls bereits beschriebenes Blockschaltbild eines zwei Lokaloszillator-Frequenzbänder aufweisenden, bekannten Frequenzaufbereitungssystem für einen Dual Band-Mobilfunk-Sender/Empfänger, und
- FIG. 4: eine graphische Darstellung im Zusammenhang mit einem zwei Lokaloszillator-Frequenzbänder, aber nur einen spannungsgesteuerten Oszillator als Lokaloszillator aufweisenden Frequenzaufbereitungssystem für einen Dual Band-Mobilfunk-Sender/Empfänger nach der Erfindung.

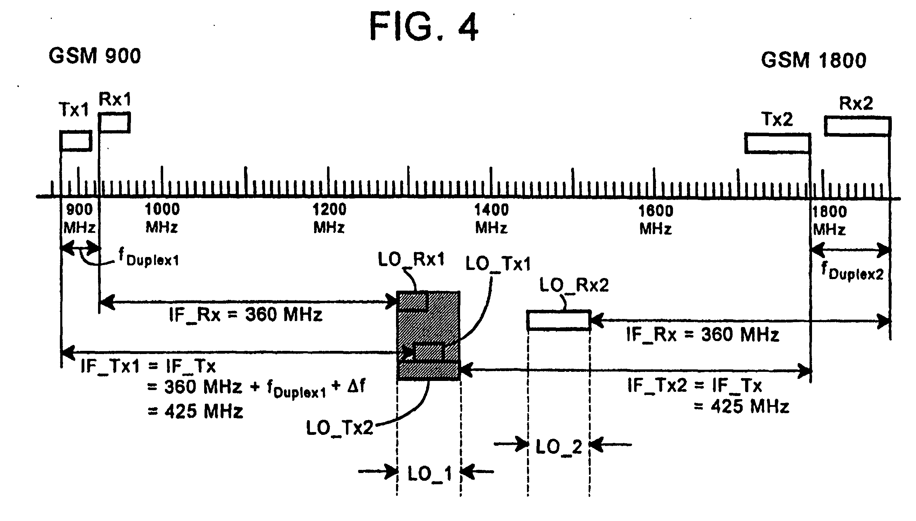

FIG. 4 zeigt wie FIG. 2 eine graphische Darstellung für ein Frequenzaufbereitungskonzept mit zwei Lokaloszillator-Frequenzbändern LO_1 und LO_2, die allerdings im Gegensatz zum bekannten Konzept nach FIG. 2 so geschickt ausgelegt und angeordnet sind, daß nur ein einziger spannungsgesteuerter Oszillator erforderlich ist. Das Sendefrequenzband Tx1 für GSM 900-Sendebetrieb liegt im Beispiel zwischen 880 und 915 MHz, das Empfangsfrequenzband Rx1 für GSM 900-Empfangsbetrieb zwischen 925 und 960 MHz, das Sendefrequenzband Tx2 für GSM 1800-Sendebetrieb zwischen 1710 und 1785 MHz und das Empfangsfrequenzband Rx2 für GSM 1800-Empfangsbetrieb zwischen 1805 und 1880 MHz.

Der Duplexfrequenzabstand f_{Duplex1} zwischen den beiden Bändern für GSM 900 beträgt also 45 MHz, wogegen der Duplexfrequenzabstand f_{Duplex2} zwischen den beiden Bändern für GSM 1800 95 MHz beträgt. Für beide Empfangsfrequenzbänder Rx1 und Rx2 ist die gleiche Empfangs-Zwischenfrequenz IF_Rx von 360 MHz und damit ein identisches ZF-Filter vorgesehen. Die Empfangs-Zwischenfrequenz IF_Rx ist somit gegenüber derjenigen des bekannten Zweiband-Konzepts nach FIG. 2 angehoben.

Das Lokaloszillator-Frequenzband LO_Rx1 für GSM 900-Empfangsbetrieb liegt zwischen 1285 und 1320 MHz und das dem oberen Lokaloszillator-Frequenzband LO_2 entsprechende Lokaloszillator-Frequenzband LO_Rx2 für GSM 1800-Empfangsbetrieb zwischen 1445 und 1520 MHz. Die Empfangs-Zwischenfrequenz IF_Rx ist gut beherrschbar und ein ZF-Filter läßt sich in Oberflächenwellen-Technologie noch problemlos realisieren.

Das im Empfangsfall jeweils nicht bediente Empfangsfrequenzband Rx1 bzw Rx2 liegt nicht im Spiegelband des gerade aktiven Empfangsfrequenzbandes. Dadurch ergeben sich bei der praktischen Realisierung keine zusätzlichen Schwierigkeiten und deutlich erhöhte Anforderungen an die Abschirmung zwischen den beiden Empfangszweigen für GSM 900 und GSM 1800, was der Forderung nach höherer Integration z.B. in einem integrierten HF-Schaltungsbaustein für beide Frequenzbänder widersprechen würde.

Bei der im erfindungsgemäßen Konzept nach FIG. 4 zugrunde gelegten Benutzung von zwei Lokaloszillator-Frequenzbändern LO_1 und LO_2 ist nicht nur die Filterung im Empfangspfad sehr vorteilhaft bewerkstelligt, sondern auch die Filterung im Sendepfad ist optimal. Obwohl dieses Konzept auf einer gemeinsamen Empfangs-Zwischenfrequenz IF Rx aufsetzt, sind auch die Sende-Zwischenfrequenzen IF_Tx1 für das untere Frequenzband und IF_Tx2 für das obere Frequenzband identisch, d.h. es gilt IF_Tx1 = IF_Tx2 = IF_Tx. Somit kann die Sendefilterung durch ein einziges Sende-ZF-Filter für die Zwischenfrequenz IF_Tx sehr effizient umgesetzt werden.

Das einmal genutzte obere Lokaloszillator-Frequenzband LO_2 überdeckt genau das Lokaloszillator-Frequenzband LO_Rx2 für GSM 1800-Empfangsbetrieb. Das insgesamt dreimal genutzte untere Lokaloszillator-Frequenzband LO_1, das in FIG. 4 schraffiert eingezeichnet ist, überdeckt genau das Lokaloszillator-Frequenzband LO_Tx2 für GSM 1800-Sendebetrieb und reicht von 1285 bis 1360 MHz. Das zwischen 1285 und 1320 MHz liegende Lokaloszillator-Frequenzband LO_Rx1 für GSM 900-Empfang liegt am unteren Ende des unteren Lokaloszillator-Frequenzbandes LO_1.

Das Lokaloszillator-Frequenzband LO_Tx1 für GSM 900-Sendebetrieb ist im unteren Lokaloszillator-Frequenzband LO_1 so angeordnet, daß sich eine Zwischenfrequenz IF_Tx1 ergibt, die mit der Zwischenfrequenz IF_Tx2 für den GSM 1800-Sendebetrieb identisch ist, d.h. es gilt IF_Tx1 = IF_Tx2 = IF_Tx.

Im in FIG. 4 dargestellten Ausführungsbeispiel beträgt die gemeinsame Zwischenfrequenzen IF_Tx für den Sendebetrieb 425 MHz. Die der Frequenz IF_Tx entsprechende Zwischenfrequenz IF_Tx1 setzt sich aus der Summe der gemeinsamen Zwischenfrequenz IF_Rx für den GSM 900- und GSM 1800-Empfangsbetrieb, im Beispiel 360 MHz, dem Duplexfrequenzabstand f_{Duplex1} im unteren Frequenzband, im Beispiel 45 MHz, und einer Frequenzdifferenz Δf, im Beispiel 20 MHz, zusammen. Die Aufweitung des unteren Lokaloszillator-Frequenzbandes LO_1 in dem in FIG. 4 gezeigten Beispiel stellt kein Problem bei der Realisierung dar, da die Abstimmsteilheit des spannungsgesteuerten Oszillators ohnehin für den Sendebetrieb im oberen Frequenzband gebraucht und beim unteren Frequenzband der gleiche Resonator benutzt wird.

Der einzige erforderliche Unterschied in der Implementierung ist ein zusätzliches Logik-Signal, das je nach Betriebsart das zutreffende Lokaloszillator-Frequenzband LO_1 oder LO_2 anwählt. Dieses Logik-Signal ist so ausgelegt, daß beim Senden im unteren und oberen Frequenzband, aber auch beim Empfangen im unteren Frequenzband das untere Lokaloszillator-Frequenzband LO_1 genutzt wird (3-fach-Bandnutzung), wogegen beim Empfangen im oberen Frequenzband das obere Lokaloszillator-Frequenzband LO_2 eingeschaltet wird (1-fach-Bandnutzung). Das immer vorhandene Frequenzband-Umschaltsignal (900/1800 MHz) kann dafür nicht verwendet werden.

Der prozentuale Frequenzunterschied zwischen dem unteren Lokaloszillator-Frequenzband LO_1 und dem oberen Lokaloszillator-Frequenzband LO_2 ist relativ klein, so daß beide Frequenzbänder LO_1 und LO_2 mit einem einzigen spannungsgesteuerten Oszillator, dessen Resonator bei der Bandumschaltung elektronisch "verkürzt" wird und damit umgeschaltet wird, bedient werden können. Es handelt sich bei einem solchen umschaltbaren spannungsgesteuerten Oszillator um einen sogenannten "band switched" VCO. Bei einer zu großen Frequenzdifferenz (> ca. 10 %) können sich die Rauscheigenschaften in mindestens einem der beiden Frequenzbänder erheblich verschlechtern.

### Bezugszeichenliste

- 1: Zweiband-Sender
- 2: ZF-Filter
- 3: Mischstufe
- 4: Antennen-Umschalter
- 5: Antenne
- 6: Zweiband-Empfänger
- 7: Mischstufe
- 8: Mischstufe
- 9: ZF-Filter
- f_{Duplex1}: Duplexfrequenzabstand im unteren Frequenzband
- f_{Duplex2}: Duplexfrequenzabstand im oberen Frequenzband
- IF_Rx: Gemeinsame Empfangs-Zwischenfrequenz
- IF_Tx: Gemeinsame Sende-Zwischenfrequenz
- IF_Tx1: Sende-Zwischenfrequenz
- IF_Tx2: Sende-Zwischenfrequenz
- LF: Tiefpaß-Schleifenfilter
- LO_0: Lokaloszillator-Frequenzband
- LO_1: Unteres Lokaloszillator-Frequenzband
- LO_2: Oberes Lokaloszillator-Frequenzband
- LO_Rx1: Lokaloszillator-Frequenzband für Empfangsbetrieb im unteren Frequenzband
- LO_Rx2: Lokaloszillator-Frequenzband für Empfangsbetrieb im oberen Frequenzband
- LO_Tx1: Lokaloszillator-Frequenzband für Sendebetrieb im unteren Frequenzband
- LO_Tx2: Lokaloszillator-Frequenzband für Sendebetrieb im oberen Frequenzband
- PLL: Phasenregelschleife (Phase Locked Loop)
- Rx1: Unteres Empfangsfrequenzband
- Rx2: Oberes Empfangsfrequenzband
- Tx1: Unteres Sendefrequenzband
- Tx2: Oberes Sendefrequenzband
- VCO1: Spannungsgesteuerter Oszillator
- VCO2: Spannungsgesteuerter Oszillator
- Δf: Frequenzdifferenz

## Patentansprüche

1. Frequenzaufbereitungssystem für einen Mobilfunk-Sender/Empfänger, der wahlweise in zwei weit auseinanderliegenden HF-Frequenzbändern, insbesondere im 900 MHz- und 1800 MHz-Bereich, betreibbar ist, unter Verwendung zweier zueinander versetzter Lokaloszillator-Frequenzbänder (LO_1, LO_2), mit deren Hilfe das über ein ZF-Filter (2) geführte Sendesignal in das obere bzw. untere Sendefrequenzband (Tx1, Tx2) und das im oberen bzw. unteren Empfangsfrequenzband (Rx1, Rx2) empfangene Signal in eine Empfangs-ZF-Lage umgesetzt werden, wobei die Frequenzumsetzung in das bzw. aus dem oberen Band mit unterlagerter Lokaloszillatorfrequenz und in das bzw. aus dem unteren Band mit überlagerter Lokaloszillatorfrequenz erfolgt und wobei auf der Empfangsseite für die Ausfilterung des ZF-Signals für beide Frequenzbänder ein gemeinsames hochselektives ZF-Filter (9) vorgesehen ist, **dadurch gekennzeichnet, daß** das obere Lokaloszillator-Frequenzband (LO_2) ausschließlich zur Umsetzung des oberen Empfangsfrequenzbandes (Rx2) in die Empfangs-ZF-Lage (IF_Rx) und das untere Lokaloszillator-Frequenzband (LO_1) sowohl zur Umsetzung des unteren Empfangsfrequenzbandes (Rx2) in die gemeinsame Empfangs-ZF-Lage (IF_Rx) als auch zur Umsetzung des Sendesignals aus der ZF-Lage in die HF-Sendelage im oberen (Tx2) und unteren (Tx1) Sendefrequenzband vorgesehen ist, wobei die Sende-ZF (IF_Tx2 = IF_Tx) für die Umsetzung in das obere Frequenzband identisch mit de Sende-ZF (IF_Tx = IF_Tx) in das untere Frequenzband ist, und daß der prozentuale Frequenzunterschied zwischen den beiden zueinander versetzten Lokaloszillator-Frequenzbändern (LO_1, LO_2) höchstens so groß bemessen ist, daß beide Lokaloszillator-Frequenzbänder mit einem einzigen spannungsgesteuerten Oszillator (VCO) als Lokaloszillator, dessen Resonator bei der Bandumschaltung nach Art des sogenannten "band switched" VCO elektronisch umgeschaltet wird, ohne erhebliche Verschlechterung der Rauscheigenschaften in mindestens einem der Frequenzbänder bedienbar sind.

2. Frequenzaufbereitungssystem nach Anspruch 1, **dadurch gekennzeichnet, daß** der prozentuale Frequenzunterschied zwischen den beiden zueinander versetzten Lokaloszillator-Frequenzbändern (LO_1, LO_2) höchstens 10 % beträgt.

3. Frequenzaufbereitungssystem nach Anspruch 1 oder 2, **dadurch gekennzeichnet, daß** der Frequenzabstand zwischen dem unteren Ende des unteren Empfangsfrequenzbandes (Rx1) und dem unteren Ende des unteren Lokaloszillator-Frequenzbandes (LO_1) gleich dem Frequenzabstand zwischen dem oberen Ende des oberen Empfangsfrequenzbandes (Rx2) und dem oberen Ende des oberen Lokaloszillator-Frequenzbandes (LO_2) ist und diese beiden Frequenzabstände jeweils gleich der für beide Bänder gemeinsamen Empfangs-ZF (IF_Rx) sind, daß der Frequenzabstand zwischen dem unteren Ende des unteren Sendefrequenzbandes (Tx1) und dem unteren Ende des für das Senden im unteren Frequenzbereich ausgenutzten Bereiches (LO_Tx1) des unteren Lokaloszillator-Frequenzbandes (LO_1) gleich dem Frequenzabstand zwischen dem oberen Ende des oberen Ende des oberen Sendefrequenzbandes (Tx2) und dem oberen Ende des unteren Lokaloszillator-Frequenzbandes (LO_1) ist und diese beiden Abstände jeweils gleich der für beide Bänder gemeinsamen und identischen Sende-ZF (IF_Tx) sind, und daß die Sende-ZF (IF_Tx) gleich der Summe aus der Empfangs-ZF (IF_Rx), der dem Versatz zwischen dem unteren Sende- und Empfangsfrequenzband entsprechenden Duplex-Frequenz (f_{Duplex1}) und der Differenzfrequenz (Δf) ist, die etwa dem halben Unterschied zwischen der Breite des oberen Sendefrequenzbandes (Tx2) und der Breite des unteren Sendefrequenzbandes (Tx1) entspricht.

4. Frequenzaufbereitungssystem nach Anspruch 3, **dadurch gekennzeichnet, daß** die Breite des unteren Lokaloszillator-Frequenzbandes (LO_1) der Breite des oberen Sendefrequenzbandes (Tx2) entspricht, daß der für die Umsetzung ins untere Sendefrequenzband (Tx1) ausgenutzte Bereich des unteren Lokaloszillator-Frequenzbandes (LO_1) zentral liegt und daß der für die Umsetzung des unteren Empfangsfrequenzbandes (Rx1) ausgenutzte Bereich des unteren Lokaloszillator-Frequenzbandes (LO_1) an dessen unterem Ende angeordnet ist.

5. Frequenzaufbereitungssystem nach einem der vorhergehenden Ansprüche, **dadurch gekennzeichnet, daß** die Breiten des unteren Sende- und Empfangsfrequenzbandes (Tx1, Tx2) unter sich gleich sind und daß die Breiten des oberen Sendeund Empfangsfrequenzbandes (Tx2, Rx2) ebenfalls unter sich gleich groß sind.

6. Frequenzaufbereitungssystem nach einem der vorhergehenden Ansprüche, **dadurch gekennzeichnet, daß** das untere Sendefrequenzband (Tx1) mit einem festgelegten Frequenzabstand unter dem unteren Empfangsfrequenzband (Rx1) und das obere Sendefrequenzband (Tx2) ebenfalls mit einem festgelegten Frequenzabstand unter dem oberen Empfangsfrequenzband (Rx2) liegt.

7. Frequenzaufbereitungssystem nach Anspruch 5 und 6, **gekennzeichnet durch** eine Verwendung in folgenden Frequenzbändern:
Unteres Sendefrequenzband (Tx1): 880 - 915 MHz,
unteres Empfangsfrequenzband (Rx1): 925 - 960 MHz,
oberes Sendefrequenzband (Tx2): 1710 - 1785 MHz,
oberes Empfangsfrequenzband (Rx2): 1805 - 1880 MHz.

8. Frequenzaufbereitungssystem nach Anspruch 7, **gekennzeichnet durch** eine Breite der beiden Lokaloszillator-Frequenzbänder (LO_1, LO_2) von jeweils 75 MHz, **durch** eine Empfangs-ZF (IF_Rx) von 360 MHz und **durch** eine Sende-ZF (IF_Tx) von 425 MHz.

9. Frequenzaufbereitungssystem nach einem der vorhergehenden Ansprüche, **dadurch gekennzeichnet, daß** zur Anwahl des jeweiligen Lokaloszillator-Frequenzbandes (LO_1, LO_2) ein zusätzliches, von der jeweils einzuschaltenden Betriebsart abhängiges Logik-Signal vorgesehen ist, das vom Band-Umschaltsignal abweicht.

10. Frequenzaufbereitungssystem nach einem der vorhergehender Ansprüche, **gekennzeichnet durch** eine Ausführung in einem integrierten Schaltungsbaustein.

## Claims

1. Frequency generating system for a mobile radio transceiver which can be optionally operated in two RF frequency bands which are far apart, especially in the 900 MHz and 1800 MHz range, using two mutually offset local-oscillator frequency bands (LO_1, LO_2) with the aid of which the transmit signal, conducted via an IF filter (2), is converted into the upper and lower transmit frequency band (Tx1, Tx2), respectively, and the signal received in the upper and lower receive frequency band (Rx1, Rx2), respectively, is converted into a receive IF frequency, the frequency conversion into and, respectively, out of the upper band being effected with a lower local-oscillator frequency and into and, respectively, out of the lower band being effected with a higher local-oscillator frequency and a common highly selective IF filter (9) being provided for filtering out the IF signal for both frequency bands at the receiving end, **characterized in that** the upper local-oscillator frequency band (LO_2) is exclusively provided for converting the upper receive frequency band (Rx2) into the receive IF frequency (IF_Rx) and the lower local-oscillator frequency band (LO_1) is provided both for converting the lower receive frequency band (Rx1) into the common receive IF frequency (IF_Rx) and also for converting the transmit signal from the IF frequency into the RF transmit frequency in the upper (Tx2) and lower (Tx1) transmit frequency band, the transmit IF (IF_Tx2 = IF_Tx) for conversion into the upper frequency band being identical to the transmit IF (IF_Tx = IF_Tx) into the lower frequency band, and that the percentage frequency difference between the two mutually offset local-oscillator frequency bands (LO_1, LO_2) is of such a magnitude that both local-oscillator frequency bands can be served with a single voltage-controlled oscillator (VCO) as local oscillator, the resonator of which is electronically switched in the manner of the so-called "band-switched" VCO during band switching without significant impairment of the noise characteristics in at least one of the frequency bands.

2. Frequency generating system according to Claim 1, **characterized in that** the percentage frequency difference between the two mutually offset local-oscillator frequency bands (LO_1, LO_2) is at most 10%.

3. Frequency generating system according to Claim 1 or 2, **characterized in that** the frequency spacing between the lower end of the lower receive frequency band (Rx1) and the lower end of the lower local-oscillator frequency band (LO_1) is equal to the frequency spacing between the upper end of the upper receive frequency band (Rx2) and the upper end of the upper receive local-oscillator frequency band (LO_2) and these two frequency spacings are in each case equal to the receive IF (IF_Rx) which is common to the two bands, that the frequency spacing between the lower end of the lower transmit frequency band (Tx1) and the lower end of the range (LO_Tx1) of the lower local-oscillator frequency band (LO_1) used for transmitting in the lower frequency range is equal to the frequency spacing between the upper end of the upper transmit frequency band (Tx2) and the upper end of the lower local-oscillator frequency band (LO_1) and these two spacings are in each case equal to the transmit IF (IF_Tx) which is common to the two bands and is identical, and that the transmit IF (IF_Tx) is equal to the sum of the receive IF (IF_Rx), the duplex frequency (f_{duplex1}) corresponding to the offset between the lower transmit and receive frequency band and the difference frequency (Δf) which corresponds to approximately half the difference between the width of the upper transmit frequency band (Tx2) and the width of the lower transmit frequency band (Tx1).

4. Frequency generating system according to Claim 3, **characterized in that** the width of the lower local-oscillator frequency band (LO_1) corresponds to the width of the upper transmit frequency band (Tx2), that the range of the lower local-oscillator frequency band (LO_1) used for conversion into the lower transmit frequency band (Tx1) is centrally located and that the range of the lower local-oscillator frequency band (LO_1) used for converting the lower receive frequency band (Rx1) is arranged at its lower end.

5. Frequency generating system according to one of the preceding claims, **characterized in that** the widths of the lower transmit and receive frequency band (Tx1, Rx1) are identical to one another and that the widths of the upper transmit and receive frequency band (Tx2, Rx2) are also identical to one another.

6. Frequency generating system according to one of the preceding claims, **characterized in that** the lower transmit frequency band (Tx1) is at a fixed frequency spacing below the lower receive frequency band (Rx1) and the upper transmit frequency band (Tx2) is also at a fixed frequency spacing below the upper receive frequency band (Rx2).

7. Frequency generating system according to Claim 5 and 6, **characterized by** being used in the following frequency bands:
lower transmit frequency band (Tx1): 880-915 MHz,
lower receive frequency band (Rx1): 925-960 MHz,
upper transmit frequency band (Tx2): 1710-1785 MHz,
upper receive frequency band (Rx2): 1805-1880 MHz.

8. Frequency generating system according to Claim 7, **characterized by** a width of in each case 75 MHz of the two local-oscillator frequency bands (LO_1, LO_2), by a receive IF (IF_Rx) of 360 MHz and by a transmit IF (IF_Tx) of 425 MHz.

9. Frequency generating system according to one of the preceding claims, **characterized in that** an additional logic signal which deviates from the band switching signal and which depends on the operating mode to be switched on in each case is provided for selecting the respective local-oscillator frequency bands (LO_1, LO_2).

10. Frequency generating system according to one of the preceding claims, **characterized by** being embodied in an integrated circuit chip.

## Revendications

1. Système synthétiseur de fréquences pour un émetteur-récepteur de radiotéléphonie mobile, qui peut être exploité au choix dans deux bandes de fréquences HF distantes l'une de l'autre, en particulier dans le domaine des 900 MHz et le domaine des 1800 MHz, en utilisant deux bandes de fréquence d'oscillateur local (LO_1, LO_2), décalées l'une de l'autre, à l'aide desquelles le signal d'émission passant par un filtre FI (2) est commuté dans la bande de fréquences d'émission inférieure respectivement supérieure (Tx1, Tx2) et le signal reçu dans la bande de fréquences de réception inférieure respectivement supérieure (Rx1, Rx2) est commuté dans une position FI de réception,
la commutation de fréquence dans la bande supérieure respectivement depuis la bande supérieure étant effectuée avec une fréquence d'oscillateur local sous-jacente et la commutation de fréquence dans la bande inférieure respectivement depuis la bande inférieure étant effectuée avec une fréquence d'oscillateur local sus-jacente, et
du côté de la réception, un filtre FI commun (9) très sélectif étant prévu pour le filtrage du signal FI pour les deux bandes de fréquences,
**caractérisé en ce que**
la bande de fréquences supérieure d'oscillateur local (LO_2) est exclusivement destinée à la commutation de la bande de fréquences de réception supérieure (Rx2) dans la position FI de réception (IF_Rx) et la bande de fréquences inférieure d'oscillateur local (LO_1) est destinée aussi bien à la commutation de la bande de fréquences de réception inférieure (Rx1) dans la position FI de réception commune (IF_Rx) qu'à la commutation du signal d'émission de la position FI dans la position d'émission HF dans la bande de fréquences d'émission supérieure (Tx2) et inférieure (Tx1), la fréquence FI d'émission (IF_Tx2 = IF_Tx) destinée à la commutation dans la bande de fréquences supérieure étant identique à la fréquence d'émission FI (IF_Tx = IF_Tx) dans la bande de fréquence inférieure, et
l'écart fréquentiel en pourcentage entre les deux bandes de fréquences décalées d'oscillateur local (LO_1, LO_2) a une dimension maximale telle sorte que les deux bandes de fréquences d'oscillateur local peuvent être utilisées avec un oscillateur unique commandé en tension (VCO) comme oscillateur local dont le résonateur est commuté électroniquement lors de la commutation de bandes à la manière d'un VCO à « commutation de gamme d'ondes », sans détériorer considérablement les caractéristiques de bruit dans au moins l'une des bandes de fréquences.

2. Système synthétiseur de fréquences selon la revendication 1, **caractérisé en ce que** l'écart fréquentiel en pourcentage entre les deux bandes de fréquences décalées d'oscillateur local (LO_1, LO_2) est au plus de 10%.

3. Système synthétiseur de fréquences selon la revendication 1 ou 2, **caractérisé en ce que**
l'écart fréquentiel entre l'extrémité inférieure de la bande de fréquences de réception inférieure (Rx1) et l'extrémité inférieure de la bande de fréquences inférieure d'oscillateur local (LO_1) est égal à l'écart fréquentiel entre l'extrémité supérieure de la bande de fréquences de réception supérieure (Rx2) et l'extrémité supérieure de la bande de fréquences supérieure d'oscillateur local (LO_2) et chacun de ces deux écarts fréquentiels est égal à la fréquence de réception FI (IF_Rx) commune aux deux bandes,
l'écart fréquentiel entre l'extrémité inférieure de la bande de fréquences d'émission inférieure (Tx1) et l'extrémité inférieure du domaine (LO_Tx1), utilisé pour l'émission dans la bande de fréquences inférieure, de la bande de fréquences inférieure d'oscillateur local (LO_1) est égal à l'écart fréquentiel entre l'extrémité supérieure de la bande de fréquences d'émission supérieure (Tx2) et l'extrémité supérieure de la bande de fréquences inférieure d'oscillateur local (LO_1) et chacun de ces deux écarts est égal à la fréquence d'émission FI (IF_Tx) identique et commune pour les deux bandes, et
la fréquence FI d'émission (IF_Tx) est égale à la somme de la fréquence FI de réception (IF_Rx), de la fréquence duplex (f_{duplex1}) correspondant au décalage entre la bande de fréquences d'émission inférieure et la bande de fréquences de réception inférieure, et de la différence de fréquence (Δf) qui correspond à peu près à la moitié de la différence entre la largeur de la bande de fréquences d'émission supérieure (Tx2) et la largeur de la bande de fréquences d'émission inférieure (Tx1).

4. Système synthétiseur de fréquences selon la revendication 3, **caractérisé en ce que**
la largeur de la bande de fréquences inférieure d'oscillateur local (LO_1) correspond à la largeur de la bande de fréquences d'émission supérieure (Tx2),
le domaine, utilisé pour la commutation dans la bande de fréquences d'émission inférieure (Tx1), de la bande de fréquences inférieure d'oscillateur local (LO_1) est central et
le domaine, utilisé pour la commutation de la bande de fréquences de réception inférieure (Rx1), de la bande de fréquences inférieure d'oscillateur local (LO_1) se trouve à son extrémité inférieure.

5. Système synthétiseur de fréquences selon l'une des revendications précédentes, **caractérisé en ce que** la largeur de la bande de fréquences d'émission inférieure et la largeur de la bande de fréquences de réception inférieure (Tx1, Rx1) sont égales entre elles et **en ce que** la largeur de la bande de fréquences d'émission supérieure et la largeur de la bande de fréquences de réception supérieure (Tx2, Rx2) sont également égales entre elles.

6. Système synthétiseur de fréquences selon l'une des revendications précédentes, **caractérisé en ce que** la bande de fréquences d'émission inférieure (Tx1) d'écart fréquentiel fixe se trouve au-dessous de la bande de fréquences de réception inférieure (Rx1) et la bande de fréquences d'émission supérieure (Tx2) également d'écart fréquentiel fixe se trouve au-dessous de la bande de fréquences de réception supérieure (Rx2).

7. Système synthétiseur de fréquences selon la revendication 5 et 6, **caractérisé en ce qu'**il est utilisé dans des bandes de fréquences successives :
la bande de fréquences d'émission inférieure (Tx1): 880 à 915 MHz,
la bande de fréquences de réception inférieure (Rx1) : 925 à 960 MHz,
la bande de fréquences d'émission supérieure (Tx2) : 1710 à 1785 MHz,
la bande de fréquences de réception supérieure (Rx2): 1805 à 1880 MHz.

8. Système synthétiseur de fréquences selon la revendication 7, **caractérisé par** une largeur des deux bandes de fréquences d'oscillateur local (LO_1, LO_2) de 75 MHz, par une largeur de fréquence FI de réception (IF_Rx) de 360 MHz et par une fréquence FI d'émission (IF_Tx) de 425 MHz.

9. Système synthétiseur de fréquences selon l'une des revendications précédentes, **caractérisé en ce qu'**il est prévu en vue de choisir la bande de fréquences d'oscillateur local correspondante (LO_1, LO_2) un signal logique supplémentaire qui dépend du type de domaine à mettre en circuit et qui s'écarte du signal de commutation de bandes.

10. Système synthétiseur de fréquences selon l'une des revendications précédentes, **caractérisé par** une réalisation sous la forme d'un module à circuits intégrés.
